# EUROPÄISCHE PATENTANMELDUNG

(11) **EP 1 284 485 A1**
(43) Veröffentlichungstag der Anmeldung: **19.02.2003**
(21) Anmeldenummer: 02016935.5
(22) Anmeldetag: 01.08.2002
(51) Int. Cl.: H01F 1/00, H01F 1/36

(54) **Superparamagnetische oxidische Partikel, Verfahren zu deren Herstellung und ihre Verwendung**

(30) Priorität: 16.08.2001 DE 10140089
(71) Anmelder: Degussa AG, 40474 Düsseldorf (DE)
(72) Erfinder: Gottfried, Heiko, 61137 Schöneck (DE); Janzen, Christian, 47169 Duisburg (DE); Pridöhl, Markus, Dr., 63538 Grosskrotzenburg (DE); Roth, Paul, Prof. Dr., 47906 Kempen (DE); Trageser, Berthold, 63579 Freigericht (DE); Zimmermann, Guido, 63450 Hanau (DE)

(57) **Zusammenfassung**

Pyrogene, oxidische Partikel, enthaltend superparamagnetische Metalloxid-Domänen mit einem Durchmesser von 3 bis 20 nm in einer nichtmagnetischen Metall- oder Metalloidoxidmatrix, die einen Chloridgehalt von 50 bis 1000 ppm aufweisen. Sie werden hergestellt durch pyrogene Verfahren, indem man den Vorläufer der superparamagnetischen Domänen und den Vorläufer der nichtmagnetischen Metall- oder Metalloidoxidmatrix in einer Flamme mit Luft und/oder Sauerstoff und Brenngas mischt, dieses Gemisch in einer Flamme zur Reaktion bringt. Die Partikel können zum Beispiel als Ferrofluide verwendet werden.

## Beschreibung

Die Erfindung betrifft pyrogene, oxidische Partikel, enthaltend superparamagnetische Metalloxid-Domänen in einer nichtmagnetischen Metall- oder Metalloidoxid-Matrix, Verfahren zu ihrer Herstellung und ihre Verwendung.

Superparamagnetische Partikel werden in vielen Bereichen, zum Beispiel für Datenspeicher, als Kontrastmittel in bildgebenden Verfahren, in Ferrofluiden oder biochemischen Trenn- und Analyseverfahren, verwendet.

Superparamagnetische Materialien besitzen Eigenschaften, die sowohl für paramagnetische Stoffe als auch für ferromagnetische Materialien charakteristisch sind. Wie paramagnetische Stoffe besitzen superparamagnetische Stoffe keine permanente (gleichgerichtete) Anordnung der elementaren magnetischen Dipole in Abwesenheit äusserer, einwirkender Magnetfelder. Andererseits weisen sie eine ähnlich hohe magnetische Suszeptibilität auf, wenn ein äusseres Magnetfeld einwirkt. Zudem zeichnen sie sich durch das Vorliegen kristalliner Strukturen aus. Superparamagnetismus tritt dann auf, wenn der Durchmesser der kristallinen Bereiche in einer normalerweise ferromagnetischen Substanz einen bestimmten, kritischen Wert unterschreitet.

Die theoretische Grundlage des Superparamagnetismus findet sich in der thermischen Destabilisierung der Permanentausrichtung der elementaren magnetischen Dipole im Kristallverbund. Die thermische Energie der elementaren magnetischen Dipole verhindert deren Ausrichtung bei Abwesenheit äusserer magnetischer Felder. Nach dem Entfernen eines äusseren einwirkenden Magnetfeldes sind die einzelnen elementaren magnetischen Dipole zwar noch vorhanden, jedoch befinden sie sich in einem derart thermisch angeregten Zustand, dass sie sich nicht parallel (gleichgerichtet) anordnen können. Dementsprechend sind Kristalle nicht permanent magnetisch.

Typische superparamagnetische Stoffe sind Maghemit (gamma-Fe₂O₃, γ-Fe₂O₃) und Magnetit (Fe₃O₄), die unterhalb einer stoff- und formabhängigen Partikelgröße von ca. 20 nm superparamagnetisches Verhalten zeigen.

Die superparamagnetischen Eigenschaften solcher Partikel bleiben nur dann erhalten, wenn eine räumliche Trennung der magnetischen Domänen gegeben ist. Dazu werden die Partikel typischerweise durch organische Verbindungen umhüllt und stabilisiert, um Aggregation zu vermeiden.

Superparamagnetische Eisenoxidpartikel können zum Beispiel durch Spraypyrolyse der Eisenverbindungen Eisen-IIIacetylacetonat, Eisen-II-ammoniumcitrat und Eisen-IIInitrat (T. Gonzáles-Carreño et al., Materials Letter 18 (1993) 151-155) oder durch eine Gasphasenreaktion ausgehend von Eisenpentacarbonyl oder Eisenacetylacetonat (S. Barth et al., Journal of Material Science 32 (1997) 1083-1092)erhalten werden.

Nachteilig bei der Spraypyrolyse ist, dass die Auswahl der Ausgangsmaterialien und der Reaktionsbedingungen, die zu gamma-Eisenoxid (γ-Fe₂O₃) führen, limitiert ist. Bei Verwendung von Eisen(III)-chlorid werden ferrimagnetische Partikel erhalten. Ferner erscheinen oft alpha-Eisenoxid (α-Fe₂O₃) und Hydroxidphasen als Verunreinigungen.

Bei der Gasphasenreaktion ist die Auswahl der Eisenoxid-Vorläufer ebenfalls begrenzt. Ausgangsmaterialien, die Chlor, Schwefel oder Stickstoff enthalten, sind explizit ausgeschlossen, da hierdurch unerwünschte Eisenoxidphasen, wie zum Beispiel beta-Eisenoxid (β-Fe₂O₃) bei Verwendung von Eisenchlorid als Vorläufer, gebildet werden.

US 5,316,699 beschreibt die Herstellung ultrafeiner superparamagnetischer Partikel in einer dielektrischen Matrix durch ein Sol-Gel-Verfahren und die nachfolgende reduzierende Behandlung mit Wasserstoff. Die erhaltenen Partikel weisen ein Netzwerk von miteinander verbundenen Poren auf, in denen sich die magnetische Komponente befindet. Nachteilig gegenüber weitestgehend porenfreien Partikeln mit gleicher Oberfläche ist, dass bei Anwendungen, die Stofftransportvorgänge beinhalten, die Poren nicht frei zugänglich sein können.

Nachteilig ist ferner die langwierige Herstellung der Partikel, die bis zu mehreren Wochen dauern kann, sowie die notwendige Nachbehandlung mit Wasserstoff bei unwirtschaftlich hohen Temperaturen. Ferner können die Partikel Verunreinigungen aus den Ausgangsmaterialien sowie Neben- und Zersetzungsprodukte aus den weiteren Reaktionsschritten enthalten.

Zachariah et al. (Nanostruct. Mater. 5, 383, 1995) beschreiben Nanomaterialien, bestehend aus Siliciumdioxid und superparamagnetischen Domänen aus Eisenoxiden, die durch Flammenoxidation erhalten werden. Dabei gehen sie von organischen Vorläufern, toxischem Eisenpentacarbonyl und Hexamethyldisiloxan aus. Diese Materialien sind zur Herstellung größerer Mengen unwirtschaftlich, zudem besteht die Gefahr des Verbleibes von Kohlenstoffverunreinigungen in den Partikeln. Ferner werden nur Partikel mit Siliciumdioxid als nichtmagnetischer Komponente und Eisenoxiden als superparamagnetischer Komponente beschrieben.

Ein weiteres Charakteristikum superparamagnetischer Partikel ist die sogenannte "blocking temperature". Es ist die Temperatur, unterhalb der kein superparamagnetisches Verhalten mehr zu beobachten ist. Sie beträgt bei Partikeln nach dem beschriebenem Verfahren 155 K. Es ist wünschenswert die "blocking temperature" für spezielle Anwendungen, zum Beispiel in der Tieftemperaturtechnik, weiter abzusenken.

Es bestand somit die Aufgabe superparamagnetische Partikel bereitzustellen, die die Nachteile des Standes der Technik nicht aufweisen. Insbesondere sollen sie weitestgehend frei von Verunreinigungen, wie zum Beispiel Kohlenstoff und nicht superparamagnetischen Modifikationen, sein und nur ein geringes Porenvolumen aufweisen.

Aufgabe der Erfindung ist es weiterhin, ein Verfahren bereitzustellen, mit dem aus gut verfügbaren, preiswerten Ausgangsmaterialien eine breite Palette von superparamagnetischen Partikeln hergestellt werden kann.

Gegenstand der Erfindung sind pyrogene, oxidische Partikel mit einem Chloridgehalt von 50 bis 1000 ppm, enthaltend superparamagnetische Metalloxid-Domänen mit einem Durchmesser von 3 bis 20 nm in einer nichtmagnetischen Matrix enthaltend ein Metalloxid oder ein Metalloidoxid.

Der Chloridgehalt rührt von der Herstellung der Partikel her. Die erfindungsgemäßen Partikel werden durch einen pyrogenen Prozess erhalten, bei dem chlorhaltige Vorläufer zum Beispiel in einer Wasserstoff/Sauerstoff-Flamme zur Reaktion gebracht werden. Die sich bildenden Partikel können Chlor zum Beispiel in Form von Oxychloriden aus der nicht vollständigen verlaufenen Flammenoxidation sowie in Form von Salzsäure aufweisen. Werden diese Verbindungen in dem sich bildenden Partikel eingeschlossen, kann der Chloridgehalt der Partikel auch durch Reinigungsschritte nicht weiter reduziert werden, ohne die Partikel zu zerstören.

Der Chloridgehalt der erfindungsgemäßen Partikel kann maximal bis zu 1000 ppm betragen. Durch Reinigungsschritte können bevorzugt Partikel mit einem Chloridgehalt von 100 bis 500 ppm erhalten werden. Er kann durch weitere Reinigungsschritte auf Werte bis zu 50 ppm reduziert werden.

Die Bestimmung des Gesamtchloridgehaltes erfolgt nach durch Wickbold-Verbrennung oder durch Aufschluß mit anschliessender Titration oder Ionenchromatographie.

Die erfindungsgemäße Herstellung Chlorid enthaltender superparamagnetischer Partikel in einem pyrogenen Prozess ist überraschend. Zum Beispiel beschreiben Barth et al. (Journal of Material Science 32 (1997) 1083-1092), dass Chloridionen einen dirigierenden Effekt für die Bildung des nicht superparamagnetischen beta-Eisenoxides (β-Fe₂O₃) aus Eisen(III)- chlorid haben. Auch Gonzáles-Carreño et al. (Materials Letter 18 (1993) 151-155) zeigen, dass bei der Spraypyrolyse von Eisen-III-chlorid im Gegensatz zu anderen Vorläufern keine superparamagnetischen Partikel erhalten werden.

Die erfindungsgemäßen Partikel können in Abhängigkeit von der Führung des pyrogenen Prozesses unterschiedliche Aggregationsgrade aufweisen. Einflußparameter können Verweilzeit, Temperatur, Druck, die Partialdrücke der eingesetzten Verbindungen, die Art und der Ort des Abkühlens nach der Reaktion sein. So kann ein breites Spektrum von weitestgehend sphärischen bis weitestgehend aggregierten Partikel erhalten werden.

Unter den Domänen der erfindungsgemäßen Partikel sind räumlich voneinander getrennte superparamagnetische Bereiche zu verstehen. Bedingt durch den pyrogenen Prozess sind die erfindungsgemäßen Partikel weitestgehend porenfrei und weisen auf der Oberfläche freie Hydroxylgruppen auf. Sie weisen superparamagnetische Eigenschaften bei Anlegen eines äußeren Magnetfeldes auf. Sie sind jedoch nicht permanent magnetisiert und weisen nur eine kleine Restmagnetisierung auf.

Gemäß einer besonderen Ausführungsform kann der Kohlenstoffgehalt der erfindungsgemäßen Partikel kleiner als 500 ppm sein. Besonders bevorzugt ist der Bereich kleiner als 100 ppm.

Die BET-Oberfläche, bestimmt nach DIN 66131, der erfindungsgemäßen Partikel kann über einen weiten Bereich von 10 bis 600 m²/g variiert werden. Besonders vorteilhaft ist der Bereich zwischen 50 und 300 m²/g.

In einer bevorzugten Ausführungsform der Erfindung kann die "blocking temperature" die Temperatur unterhalb der kein superparamagnetisches Verhalten mehr festzustellen ist, der erfindungsgemäßen Partikel nicht mehr als 150 K betragen. Diese Temperatur kann neben der Zusammensetzung des Partikels, auch von der Größe der superparamagnetischen Domänen und deren Anisotropie abhängen.

Der Anteil der superparamagnetischen Domänen der erfindungsgemäßen Partikel kann zwischen 1 und 99,6 Gew.-% liegen. In diesem Bereich liegen durch die nicht magnetische Matrix räumlich getrennte Bereiche von superparamagnetischen Domänen vor. Bevorzugt ist der Bereich mit einem Anteil an superparamagnetischen Domänen größer 30 Gew.-%, besonders bevorzugt größer 50 Gew.-%. Mit dem Anteil der superparamagnetischen Bereiche nimmt auch die erzielbare magnetische Wirkung der erfindungsgemäßen Partikel zu.

Die superparamagnetischen Domänen können bevorzugt die Oxide von Fe, Cr, Eu, Y, Sm oder Gd enthalten. In diesen Domänen können die Metalloxide in einer einheitlichen Modifikation oder in verschiedenen Modifikationen vorliegen.

Daneben können auch Bereiche nicht magnetischer Modifikationen in den Partikeln vorliegen. Dies können Mischoxide der nichtmagnetischen Matrix mit den Domänen sein. Als Beispiel hierfür soll Eisensilikalit (FeSiO₄) dienen. Diese nichtmagnetischen Bestandteile verhalten sich bezüglich des Superparamagnetismus wie die nichtmagnetische Matrix. Das heißt: Die Partikel sind superparamagnetisch,
wobei mit steigendem Anteil der nichtmagnetischen Bestandteile jedoch die Sättigungsmagnetisierung sinkt.

Zusätzlich können auch magnetische Domänen vorliegen, die aufgrund ihrer Größe keinen Superparamagnetismus zeigen und eine Remanenz induzieren. Dies führt zur Erhöhung der volumenspezifischen Sättigungsmagnetisierung. Je nach Anwendungsgebiet lassen sich so angepaßte Partikel herstellen.

Eine besonders bevorzugte superparamagnetische Domäne ist Eisenoxid in der Form von gamma-Fe₂O₃ (γ-Fe₂O₃), Fe₃O₄, Mischungen aus gamma-Fe₂O₃ (γ-Fe₂O₃) und Fe₃O₄ und/oder Mischungen der vorgenannten mit Eisen enthaltenden, nicht magnetischen Verbindungen.

Die nichtmagnetische Matrix kann die Oxide der Metalle und Metalloide von Si, Al, Ti, Ce, Mg, Zn, B, Zr oder Ge umfassen. Besonders bevorzugt sind Siliciumdioxid, Aluminiumoxid, Titandioxid und Ceroxid. Neben der räumlichen Trennung der superparamagnetischen Domänen kommt der Matrix auch die Aufgabe zu, die Oxidationsstufe der Domäne zu stabilisieren. So wird zum Beispiel Magnetit als superparamagnetische Eisenoxidphase durch eine Siliciumdioxidmatrix stabilisiert.

Die erfindungsgemäßen Partikel können durch Adsorption, Reaktionen an der Oberfläche oder Komplexierung von beziehungsweise mit anorganischen und organischen Reagenzien modifiziert werden.

Zum Beispiel können die erfindungsgemäßen Partikel durch eine nachfolgende Behandlung mit Oberflächenmodifizierungsreagenzien eine teilweise oder vollständig hydrophobierte Oberfläche erhalten. Die Oberflächenmodifizierung kann analog denen in DE-A-11 63 784, DE-A-196 16 781, DE-A-197 57 210 oder DE-A-44 02 370, DE-A 42 02 695, DE-A-42 02 694 für Siliciumdioxid, Titandioxid und Aluminiumoxid beschriebenen Verfahren erfolgen.

Die erfindungsgemäßen Partikel können ferner teilweise oder vollständig mit einem weiteren Metalloxid umhüllt sein. Dies kann beispielsweise dadurch erfolgen, dass die erfindungsgemäßen Partikel in einer Lösung, enthaltend metallorganische Verbindungen, dispergiert werden. Nach der Zugabe eines Hydrolysierkatalysators wird die metallorganische Verbindung in ihr Oxid überführt, das sich auf den erfindungsgemäßen Partikeln abscheidet. Beispiele solcher metallorganischer Verbindungen sind die Alkoholate des Siliciums (Si(OR)₄), Aluminiums (Al(OR)₃) oder Titans (Ti(OR)₄).

Die Oberfläche der erfindungsgemäßen Partikel kann auch durch Adsorption von bioorganischen Materialien, wie Nucleinsäuren oder Polysacchariden, modifiziert sein. Die Modifizierung kann in einer Dispersion, enthaltend das bioorganische Material und die erfindungsgemäßen Partikel, erfolgen.

Ein weiterer Gegenstand der Erfindung ist ein Verfahren zur Herstellung der erfindungsgemäßen Partikel umfassend die Schritte:
- Gemeinsames oder getrenntes Verdampfen einer Verbindung, die die Metall- oder Metalloidkomponente der nichtmagnetischen Matrix enthält und einer Verbindung, die die Metallkomponente der superparamagnetischen Domänen enthält, wobei wenigstens eine Verbindung Chlor enthält und wobei die Dampfzusammensetzung dem später gewünschten Verhältnis von superparamagnetischen Domänen und der nichtmagnetischen Matrix entspricht,
- Zuführen dieses Gemisches in eine Mischzone, in der es mit Luft und/oder Sauerstoff und einem Brenngas gemischt wird und Zuführen des Gemisches in einen Brenner bekannter Bauart, und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase.

Als Brenngase können bevorzugt Wasserstoff oder Methan eingesetzt werden.

Die erfindungsgemäßen Partikel können weiterhin durch ein Verfahren erhalten werden, umfassend die Schritte:
- Herstellen eines Aerosols durch Vernebelung eines Precursors, der die Metallkomponente der superparamagnetischen Domänen enthält und der in Form einer Lösung oder einer Dispersion eines Salzes vorliegt,
- Mischen dieses Aerosols mit dem Gasgemisch einer Flammenhydrolyse oder einer Flammenoxidation, welches den Precursor der nichtmagnetischen Matrix enthält, in eine Mischzone, wobei die Dampfzusammensetzung dem später gewünschten Verhältnis von superparamagnetischen Domänen und der nichtmagnetischen Matrix entspricht,
- Zuführen des Aerosol-Gas-Gemisches in einen Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase,
wobei der Precursor der superparamgnetischen Domänen und/oder der Precursor der nicht-magnetischen Matrix eine chlorhaltige Verbindung ist.

Die erfindungsgemäßen Partikel können ferner durch ein Verfahren erhalten werden, umfassend die Schritte:
- Gemeinsames oder getrenntes Herstellen eines Aerosols durch Vernebelung eines Precursors der superparamagnetischen Domänen und eines Precursors der nichtmagnetischen Matrix, wobei diese Precursoren in Form einer Lösung oder einer Dispersion von Salzen vorliegen, wobei die Aerosolzusammensetzung dem später gewünschten Verhältnis von superparamagnetischen Domänen und der nichtmagnetischen Matrix entspricht,
- Gemeinsames oder getrenntes Zuführen der Aerosole der Precursoren in eine Mischzone, in der sie mit Luft und/oder Sauerstoff und einem Brenngas gemischt werden und
- Zuführen des Aerosol-Gas-Gemisches in einen Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase,
wobei der Precursor der superparamgnetischen Domänen und/oder der Precursor der nicht-magnetischen Matrix eine chlorhaltige Verbindung ist.

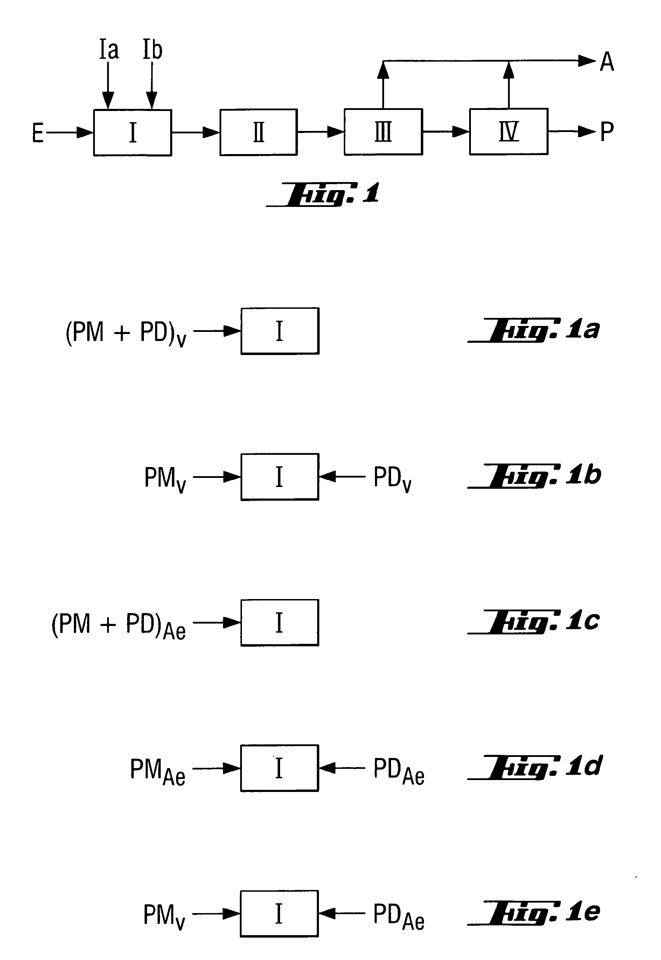

Fig. 1 zeigt ein vereinfachtes Verfahrensfließbild mit den Verfahrensstufen I bis IV, wobei gilt: I = Mischzone, II = Brenner, III = Filter, IV = Reinigung. Der Eingangsstrom Ia in die Mischzone repräsentiert Luft und/oder Sauerstoff, Ib ein Brenngas, E die Precursoren der produktbildenden Soffe. A stellt das Abgas dar, P das erfindungsgemäße Produkt. Die Mischzone I kann Bestandteil einer getrennt vom Brenner angeordneten Mischeinheit sein oder sie kann Bestandteil des Brenners selbst sein. Bevorzugterweise ist die Mischzone Bestandteil des Brenners.

Fig. 1a-e zeigen Varianten der Zuführung von E in die Mischzone I. In Fig. 1a werden die Precursoren der Matrix PM und die Precusoren der Domänen PD zusammen verdampft (gekennzeichnet mit Index v) und der Mischzone zugeführt. In Fig. 1 b werden PM und PD getrennt verdampft und der Mischzone zugeführt. Fig. 1c zeigt eine Variante, bei der PM und PD zusammen in ein Aerosol (gekennzeichnet mit Index Ae) überführt und der Mischzone zugeführt werden, Fig. 1d zeigt eine getrennte Aerosol-Erzeugung und Zuführung von PM und PD. Fig. 1e zeigt eine Anordnung bei der PM in verdampfter Form, PD in Form eines Aerosols der Mischzone zugeführt werden.

Die Vernebelung kann bevorzugt durch eine Ein- oder Zweistoffdüse oder durch einen Aerosolgenerator erfolgen.

Die Reaktionspartner, Vorläufer der Metalloxid- oder Metalloidoxidmatrix und der superparamagnetischen Domänen, können bei beiden erfindungsgemäßen Verfahren zum Beispiel beide anorganische, chlorhaltige Salze sein. Es kann auch nur der Vorläufer der Metalloxid- oder Metalloidoxidmatrix chlorhaltig sein, und der Vorläufer der superparamagnetischen Domänen ein chlorfreies anorganisches Salz, wie zum Beispiel ein Nitrat, oder eine chlorfreie metallorganische Verbindung, wie zum Beispiel Eisenpentacarbonyl, sein. Es ist auch möglich, dass der Vorläufer der Metalloxid- oder Metalloidoxidmatrix ein chlorfreies anorganisches Salz, wie zum Beispiel Nitrat, oder eine chlorfreie metallorganische Verbindung, wie zum Beispiel ein Siloxan, und der Vorläufer der superparamagnetischen Domänen ein chlorhaltiges, anorganisches Salz ist. Besonders bevorzugt ist, dass sowohl der Vorläufer der Metalloxid- oder Metalloidoxidmatrix als auch der Vorläufer der superparamagnetischen Domänen chlorhaltige, anorganische Salze sind.

Das Abkühlen kann bei beiden Verfahren bevorzugt mittels eines Wärmetauschers oder durch direktes Einmischen von Wasser oder eines Gases, wie zum Beispiel Luft oder Stickstoff oder durch adiabates Entspannen des Prozessgases über eine Lavaldüse erfolgen.

Ein weiterer Gegenstand der Erfindung ist die Verwendung der erfindungsgemäßen Partikel für Datenspeicher, als Kontrastmittel in bildgebenden Verfahren, für biochemische Trenn- und Analyseverfahren, für medizinische Anwendungen, wie zum Beispiel Drug-Targeting und Kontrastmittel, als Abrasiv, als Katalysator oder als Katalysatorträger, die aufgrund ihres Superparamagnetismus leicht zurückgewonnen werden können, als Füllstoff, als Verdickungsmittel, zur Wärmedämmung, als Dispergierhilfsmittel, als Fließhilfsmittel und in Ferrofluiden. Letztere werden unter anderem als Dichtungsmittel für Wellen, Kühl- und Dämpfungsmedium in Lautsprechern, sowie für eine schaltbare Doppelbrechung (Cotton-Moutton-Effekt) verwendet.

### Beispiele

### Analytische Verfahren

### Bestimmung der BET-Oberfläche

Die BET-Oberfläche der erfindungsgemäßen Partikel wurde bestimmt nach DIN 66131.

### Bestimmung des Gehaltes an Siliciumdioxid, Eisenoxid und Ceroxid

Ca. 0,3 g der erfindungsgemäßen Partikel werden genau in einen Platintiegel eingewogen und zur Bestimmung des Glühverlustes bei 700°C für 2 h in einem Tiegel geglüht, im Exsikkator abgekühlt und zurückgewogen. Nach Abspülen der Ränder mit Reinstwasser wird das Probenmaterial mit 1 ml H₂SO₄ p.a. 1:1 und mind. 3 ml HF 40% p.a. auf einer Heizplatte zur Trockene abgeraucht. Der Gewichtsverlust durch das Abrauchen wird als SiO₂ angenommen und der Rest als Fe₂O₃.

Der Gehalt an Eisenoxid und Ceroxid in Beispiel 4 wurde bestimmt durch ICP-OES.

### Bestimmung des Chlorid-Gehaltes

Ca. 0,3 g der erfindungsgemäßen Partikel werden genau eingewogen, mit 20 ml 20 prozentiger Natronlauge p.a. versetzt, gelöst und unter Rühren in 15 ml gekühlte HNO₃ überführt. Der Chlorid-Anteil in der Lösung wird mit AgNO₃-Lösung (0,1 mol/l oder 0,01 mol/l) titriert.

### Bestimmung des Kohlenstoff-Gehaltes

Ca. 100 - 1000 mg der erfindungsgemäßen Partikel werden genau in einen Tiegel eingewogen, mit je 1 g Reinsteisen und 1 g Zuschlagstoff (LECOCELL II) versetzt und in einem Kohlenstoffanalysator (LECO) bei ca. 1800 °C mit Hilfe von Sauerstoff verbrannt. Das entstehende CO₂ wird mittels IR gemessen und daraus der Gehalt berechnet.

### Bestimmung der Blocking-Temperature

In einem SQUID-Meßgerät (Superconducting Quantum Interference Device) wird das magnetische Moment der erfindungsgemäßen Partikel in Abhängigkeit von der Temperatur gemessen. Dazu wird eine entmagnetisierte Probe auf 5 K abgekühlt. In einem schwachen äußeren Magnetfeld wird die Probe auf Raumtemperatur erwärmt und während der Erwärmung das magnetische Moment der Probe gemessen. Die entsprechende Kurve wird als "Zero Field Cooled" - Kurve (ZFC) bezeichnet.

### Beispiel 1: Superparamagnetisches Eisenoxid in Siliciumdioxidmatrix

0,14 kg/h SiCl₄ werden bei ca. 200°C verdampft und mit 3,5 Nm³/h Wasserstoff sowie 15 Nm³/h Luft in eine Mischzone eingespeist.

Zusätzlich wird ein Aerosol, das aus einer 10 gewichtsprozentigen wässerigen Eisen(III)chloridlösung mittels einer Zweistoffdüse, erhalten wird, mittels eines Traggases (3 Nm³/h Stickstoff) in die Mischzone innerhalb des Brenners eingebracht.

Das homogen gemischte Gas-Aerosol-Gemisch verbrennt dort bei einer adiabaten Verbrennungstemperatur von etwa 1200°C und einer Verweilzeit von etwa 50 msec.

Die adiabate Verbrenungstemperatur errechnet sich aus der Massen- und Energiebilanz der in den Reaktor eingehenden Stoffströme. Bei der Energiebilanz wird sowohl die Reaktionsenthalpie der Wasserstoffverbrennung und der Umsetzung des Siliciumtetrachlorids zu Siliciumdioxid bzw. des Eisen(III)chlorides zu Eisen(II)oxid berücksichtigt als auch die Verdampfung der wässerigen Lösung.

Die Verweilzeit errechnet sich aus dem Quotienten des durchströmten Anlagenvolumens und des Betriebsvolumenstroms der Prozeßgase bei adiabater Verbrennungstemperatur.

Nach der Flammenhydrolyse werden in bekannter Art die Reaktionsgase und das entstandene mit Eisenoxid dotierte Siliciumdioxid-Pulver abgekühlt und mittels eines Filter wird der Feststoff von dem Abgasstrom abgetrennt.

In einem weiteren Schritt werden durch Behandlung mit wasserdampfhaltigem Stickstoff noch anhaftende Salzsäurereste vom Pulver entfernt.

Die Beispiele 2 und 3 werden analog Beispiel 1 durchgeführt. Die Reaktionsparameter sind Tabelle 1 zu entnehmen.

**Tabelle 1:**

| **Reaktionsparameter der Beispiele 1 bis 4** | | | | |
|---|---|---|---|---|
| **Beispiel** | **1** | **2** | **3** | **4** |
| SiCl₄ [kg/h] | 0,14 | 0,23 | 0,21 | - |
| FeCl₃^{(*)} [kg/h] | 1,02 | 0,41 | 0,40 | 0,59 |
| CeCl₃^{(**)} [kg/h] | - | - | - | 0,41 |
| Adiabate Temp.[°C] | 1200 | 1250 | 1150 | 1200 |
| Verweilzeit [ms] | ca. 50 | ca. 50 | ca. 50 | ca. 50 |

| | | | | |
|---|---|---|---|---|
| * 10 prozentige wässerige FeCl₃-Lösung; FeCl₂ in Beispiel 3 | | | | |
| ** 10 prozentige wässerige CeCl₃-Lösung | | | | |

### Beispiel 4: Superparamagnetisches Eisenoxid in Ceroxidmatrix

3,5 Nm³/h Wasserstoff sowie 15 Nm³/h Luft werden in eine Mischzone innerhalb des Brenners eingespeist. Zusätzlich wird ein Aerosol, das aus einer 10 gewichtsprozentigen wässerigen bestehend aus Eisen(III)chloridlösung und einer 10 gewichtsprozentigen Cer(III)chloridlösung mittels einer Zweistoffdüse, erhalten wird, mittels eines Traggases (3 Nm³/h stickstoff) in die Mischzone eingebracht, in der das homogen gemischte Gas-Aerosol-Gemisch verbrennt. Die Aufarbeitung und Reinigung des Reaktionsgemisches erfolgt wie unter Beispiel 1 beschrieben. Die Reaktionsparameter sind in Tabelle 1 wiedergegeben.

In Tabelle 2 sind die die Analyseergebnisse zu den Beispielen zu finden.

**Tabelle 2:**

| **Analytische Daten der erfindungsgemäßen Partikel aus den Beispielen 1 bis 4** | | | | |
|---|---|---|---|---|
| **Beispiele** | **1** | **2** | **3** | **4** |
| Eisenoxid⁽*⁾ [Gew.-%] | 50 | 50 | 25 | 50 |
| C [ppm] | 70 | 53 | 42 | < 10 |
| Cl [ppm] | 368 | 220 | 102 | 635 |
| Sättigungs- magnetisierung [Am²/kg] | 17 | 6,5 | 10,4 | 12,5 |
| gamma - Fe₂O₃ - Kristallitgröße [nm] | 10,8 | 11,2 | 11,5 | 15,1 |
| Blocking- Temperatur [K] | Ca. 100 | Ca. 40 | Ca. 110 | n.b. ⁽**⁾ |
| BET-Oberfläche [m²/g] | 146 | 174 | 143 | 88 |

| | | | | |
|---|---|---|---|---|
| * berechnet als Fe₂O₃; ** n.b. = nicht bestimmt | | | | |

### TEM-Aufnahmen

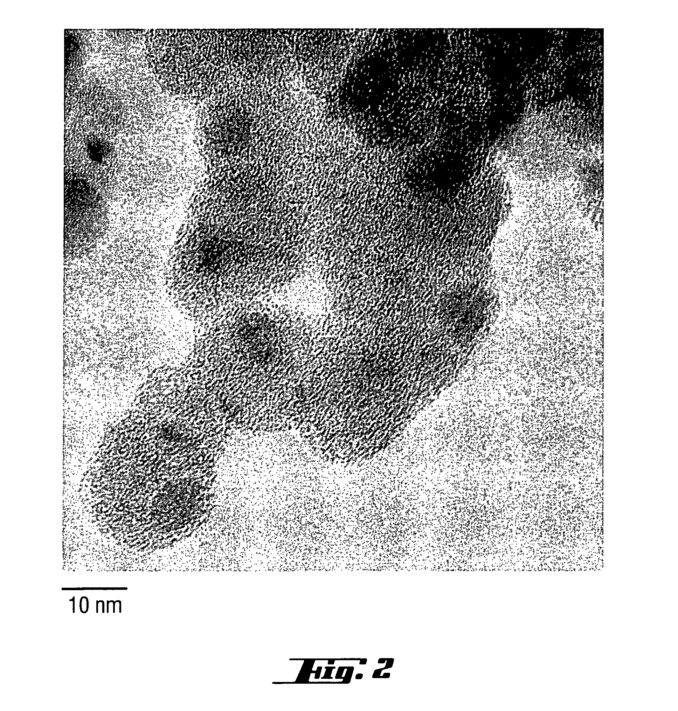

Die TEM-Aufnahmen der Partikel aus den Beispielen 1 bis 3 zeigen eine amorphe Siliciumdioxidmatrix, in die Eisenoxiddomänen mit einer Kristallgröße von 5 bis 15 nm eingebettet sind. **Fig. 2** zeigt eine TEM-Aufnahme der Partikel aus Beispiel 2. Dabei ist Eisenoxid dunkel dargestellt. Die TEM-Aufnahme der Partikel aus Beispiel 4 zeigt eine teils amorphe, teils kristalline Ceroxidmatrix, in die Eisenoxiddomänen mit einer Kristallgröße von 5 - 15 nm eingebettet sind.

### Röntgendiffraktogramme (XRD)

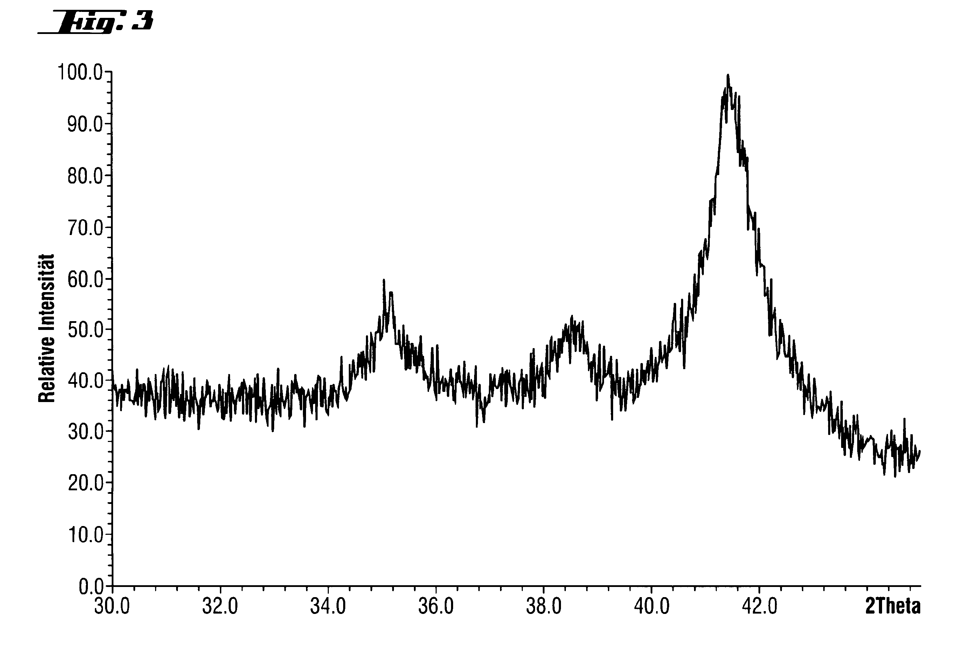

Die XRD-Spektren der Partikel aus den Beispielen 1 bis 4 zeigen ein deutliches Signal bei etwa 2theta = 41,5°. Dies entspricht den Signalinien von Magnetit (Fe₃O₄) und Maghemit (gamma-Fe₂O₃). Bei den Partikeln der Beispiele 1 und 3 deutet das schwach ausgeprägte Signal bei 2theta = 38,5° auf Anteile von Hematit (alpha-Fe₂O₃) hin. Das Grundrauschen der Signale in den Beispielen 1 bis 3 durch das amorphe Siliciumdioxid, in Beispiel 4 durch das amorphe Ceroxid hervorgerufen. Das XRD-Spektrum von Beispiel 4 zeigt zusätzlich zwei Signale bei 2theta = 38,5° und 33,2°, die denen von kristallinem Cer(IV)oxid entsprechen. **Fig. 3** zeigt das Röntgendiffraktogramm der Partikel aus Beispiel 1.

Die Abschätzung nach Debye-Scherrer ergibt eine mittlere Maghemit-Kristallitgröße für die Partikel aus Beispiel 1 von 10,8 nm, aus Beispiel 2 von 11,2 nm, aus Beispiel 3 von 11,5 nm und aus Beispiel 4 von 15,1 nm.

### Blocking Temperature

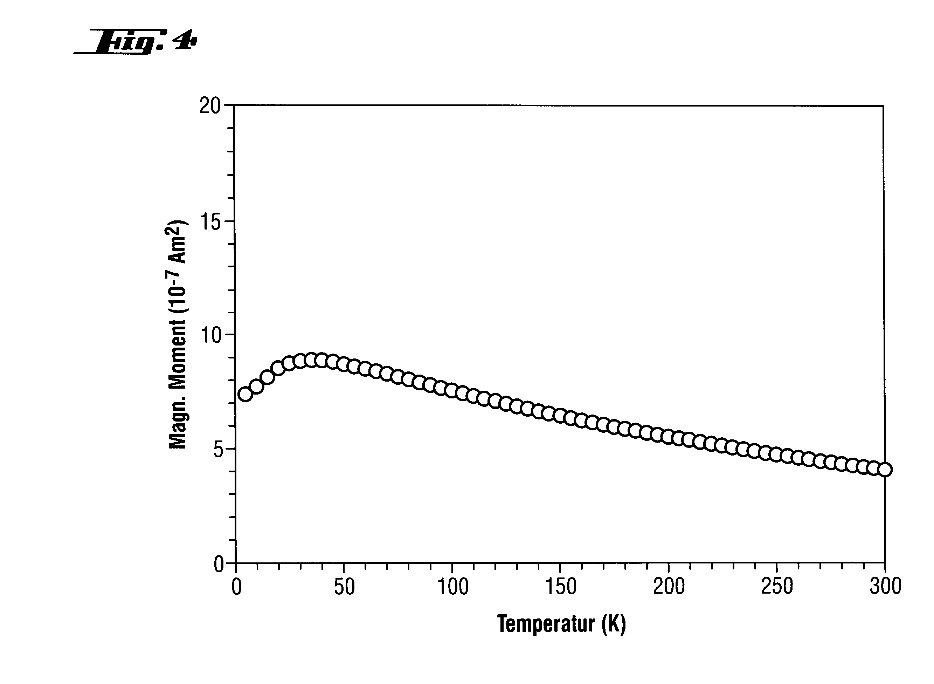

Das Maximum der "Zero Field Cooled" Kurve entspricht der Blocking -Temperatur des Kompositmaterials. Als Blocking-Temperatur wird diejenige Temperatur bezeichnet, bei der Superparamagnetismus auftritt. Oberhalb dieser Temperatur zeigt die Magnetisierungskurve keine Hysterese. Die Temperatur reicht aus, um nach Entfernen des äußeren Magnetfeldes die Orientierung der magnetischen Domänen aufgrund von Entropieeffekten wieder aufzuheben. **Fig. 4** zeigt die "Zero Field Cooled" Kurve der Partikel aus Beispiel 2.

Die Blocking-Temperaturen T_{B} der Partikel aus Beispiel 1 liegen bei etwa 100 K, aus Beispiel 2 bei etwa 40 K, aus Beispiel 3 bei etwa 120 K.

### Magnetisierung

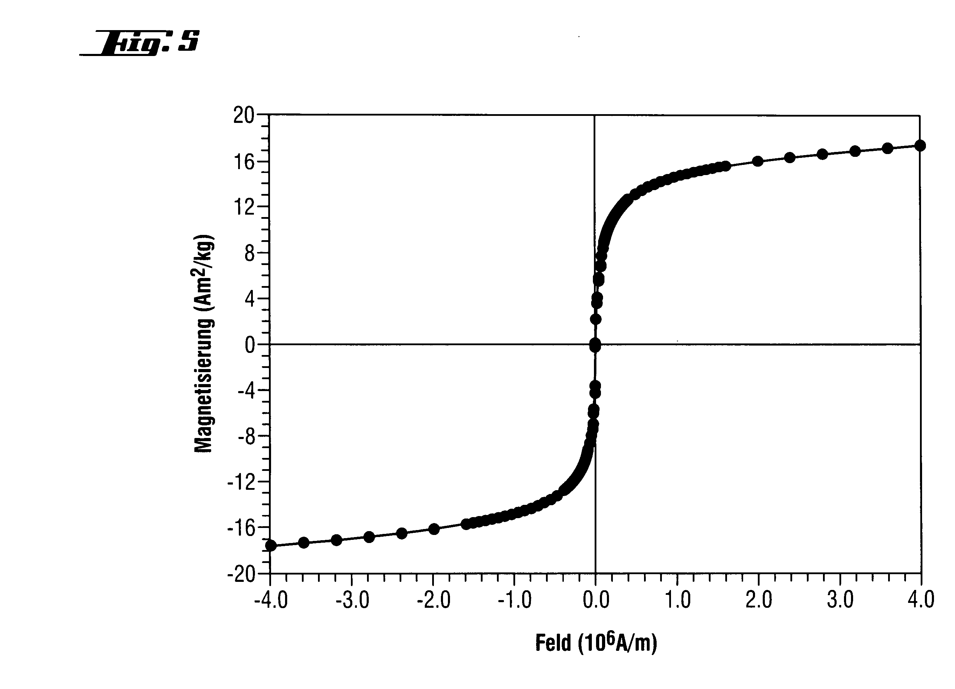

Das superparamagnetische Verhalten lässt sich aus der Magnetisierungskurve ableiten, die bei den Beispielen 1 bis 4 keine Hysterese zeigt. **Fig. 5** zeigt die Magnetisierungskurve der Partikel aus Beispiel 1.

Die Sättigungsmagnetisierung ist das maximal erreichbare magnetische Moment pro Volumeneinheit. Die Sättigungsmagnetisierung wird in unendlich großen Magnetfeldern erreicht. Die Magnetisierung, die sich bei einem äußeren Feld von B = 5 T einstellt entspricht näherungsweise der Sättigungsmagnetisierung und wird als Maß für die Magnetisierbarkeit herangezogen.

Die Sättigungsmagnetisierung entsprechend der Magnetisierungskurven der Partikel aus Beispiel 1 betragen 17 Am²/kg, aus Beispiel 2 6,5 Am²/kg, aus Beispiel 3 10,4 Am²/kg aus Beispiel 4 12,5 Am²/kg.

## Patentansprüche

1. Pyrogene, oxidische Partikel mit einem Chloridgehalt von 50 bis 1000 ppm, enthaltend superparamagnetische Metalloxid-Domänen mit einem Durchmesser von 3 bis 20 nm in einer nichtmagnetischen Matrix enthaltend ein Metalloxid oder ein Metalloidoxid.

2. Partikel nach Anspruch 1, **dadurch gekennzeichnet, dass** der Kohlenstoffgehalt kleiner als 500 ppm ist.

3. Partikel nach den Ansprüchen 1 oder 2, **dadurch gekennzeichnet, dass** die BET-Oberfläche zwischen 10 und 600 m²/g liegt.

4. Partikel nach den Ansprüchen 1 bis 3, **dadurch gekennzeichnet, dass** die "blocking temperature" nicht größer als 150 K ist.

5. Partikel nach den Ansprüchen 1 bis 4, **dadurch gekennzeichnet, dass** der Anteil der superparamagnetischen Domänen 1 bis 99,6 Gew.-% beträgt.

6. Partikel nach den Ansprüchen 1 bis 5, **dadurch gekennzeichnet, dass** die superparamagnetischen Domänen die Oxide von Fe, Cr, Eu, Y, Sm oder Gd enthalten.

7. Partikel nach Anspruch 6, **dadurch gekennzeichnet, dass** Eisenoxid γ-Fe₂O₃, Fe₃O₄, Mischungen aus γ-Fe₂O₃ und Fe₃O₄ und/oder Mischungen der vorgenannten mit Eisen enthaltenden, nicht magnetischen Verbindungen umfasst.

8. Partikel nach den Ansprüchen 1 bis 7, **dadurch gekennzeichnet, dass** die nichtmagnetische Metall- oder Metalloidoxidmatrix die Oxide von Si, Al, Ti, Ce, Mg, Zn, B, Zr oder Ge umfasst.

9. Partikel nach den Ansprüchen 1 bis 8, **dadurch gekennzeichnet, dass** sie durch Adsorption, Reaktion an der Oberfläche oder Komplexierung von beziehungsweise mit anorganischen und organischen Reagentien modifiziert sind.

10. Verfahren zur Herstellung der Partikel gemäß den Ansprüchen 1 bis 8 umfassend die Schritte:
- Gemeinsames oder getrenntes Verdampfen einer Verbindung, die die Metall- oder Metalloidkomponente der nichtmagnetischen Matrix enthält und einer Verbindung, die die Metallkomponente der superparamagnetischen Domänen enthält, wobei wenigstens eine Verbindung Chlor enthält und wobei die Dampfzusammensetzung dem später gewünschten Verhältnis von superparamagnetischen Domänen und der nichtmagnetischen Matrix entspricht,
- Zuführen dieses Gemisches mit Hilfe eines Traggases in eine Mischzone, in der es mit Luft und/oder Sauerstoff und einem Brenngas gemischt wird und Zuführen des Gemisches in einen Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase.

11. Verfahren zur Herstellung der Partikel gemäß den Ansprüchen 1 bis 8 umfassend die Schritte:
- Herstellen eines Aerosols durch Vernebelung eines Precursors, der die Metallkomponente der superparamagnetischen Domänen enthält und der in Form einer Lösung oder einer Dispersion eines Salzes vorliegt,
- Mischen dieses Aerosols mit dem Gasgemisch einer Flammenhydrolyse oder einer Flammenoxidation, welches den Precursor der nichtmagnetischen Matrix enthält, in einer Mischzone, wobei die Dampfzusammensetzung dem später gewünschten Verhältnis von superparamagnetischen Domänen und der nichtmagnetischen Matrix entspricht,
- Zuführen des Aerosol-Gas-Gemisches in einen Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase,
wobei der Precursor der superparamgnetischen Domänen und/oder der Precursor der nicht-magnetischen Matrix eine chlorhaltige Verbindung ist.

12. Verfahren zur Herstellung der Partikel gemäß den Ansprüchen 1 bis 8 umfassend die Schritte:
- Gemeinsames oder getrenntes Herstellen eines Aerosols durch Vernebelung eines Precursors der superparamagnetischen Domänen und eines Precursors der nichtmagnetischen Matrix, wobei diese Precursoren in Form einer Lösung oder einer Dispersion von Salzen vorliegen, wobei die Aerosolzusammensetzung dem später gewünschten Verhältnis von superparamagnetischen Domänen und der nichtmagnetischen Matrix entspricht,
- Gemeinsames oder getrenntes Zuführen der Aerosole der Precursoren in eine Mischzone, in der sie mit Luft und/oder Sauerstoff und einem Brenngas gemischt werden und
- Zuführen des Aerosol-Gas-Gemisches in einen Brenner bekannter Bauart und Verbrennen dieses Gemisches in einer Flamme innerhalb einer Verbrennungskammmer,
- Kühlen der heißen Gase und des festen Produktes, abtrennen der Gase vom festen Produkt und gegebenenfalls Reinigung des festen Produktes durch eine Wärmebehandlung mittels Wasserdampf angefeuchteter Gase,
wobei der Precursor der superparamgnetischen Domänen und/oder der Precursor der nicht-magnetischen Matrix eine chlorhaltige Verbindung ist.

13. Verwendung der Partikel gemäß den Ansprüchen 1 bis 9 in Datenspeichern, als Kontrastmittel in bildgebenden Verfahren, für biochemische Trenn- und Analyseverfahren, für medizinische Anwendungen, zum Polieren von Glas- und Metalloberflächen, als Katalysator oder als Katalysatorträger, als Füllstoff, als Verdickungsmittel, zur Wärmedämmung, als Dispergierhilfsmittel, als Fließhilfsmittel, in Ferrofluiden.
